# DEMANDE DE BREVET EUROPEEN

(11) **EP 2 108 864 A1**
(43) Date de publication de la demande: **14.10.2009**
(21) Numéro de dépôt: 09157243.8
(22) Date de dépôt: 03.04.2009
(51) Int. Cl.: F16H 61/02

(54) **Boîte de vitesses d'un véhicule automobile**

(30) Priorité: 09.04.2008 FR 0852379
(71) Demandeur: Peugeot Citroën Automobiles Société Anonyme, 78140 Velizy Villacoublay (FR)
(72) Inventeur: Le Lievre, Armel, 78360, MONTESSON (FR)

(57) **Abrégé**

La présente invention se rapporte à une boîte de vitesses d'un véhicule automobile. Dans l'invention, la boîte de vitesses automatique ou manuelle pilotée automatiquement comporte :
- une pluralité de rapports de démultiplication incluant au moins deux rapports de décollage,
- un calculateur 15 comportant des moyens pour sélectionner automatiquement un rapport de décollage parmi lesdits au moins deux rapports de décollage en fonction des conditions d'utilisation dudit véhicule automobile. L'invention trouve une application immédiate dans le domaine des véhicules automobiles.

## Description

La présente invention concerne une boîte de vitesses de véhicule automobile.

L'invention concerne plus particulièrement une boîte de vitesses comprenant une pluralité de rapports de démultiplication.

Une des fonctions principales d'une boîte de vitesses de véhicule automobile est d'adapter le couple transmis par le moteur du véhicule au couple résistant rencontré par le véhicule.

Cette adaptation est rendue possible en faisant appel à différents rapports de démultiplication modifiant le rapport entre la vitesse de rotation du moteur, également appelée régime moteur, et la vitesse de rotation des roues. Afin d'améliorer l'exploitation du moteur dans une multitude de cas d'utilisation possible, par exemple la circulation urbaine, la circulation sur route, en terrain plat ou en terrain accidenté, il est souhaitable de disposer de plusieurs rapports de démultiplication.

Ainsi, la majorité des boites de vitesses équipant les véhicules automobiles comporte quatre, cinq et voire six rapports de démultiplication de marche avant. Par ailleurs, ces mêmes boîtes de vitesses comportent également un rapport de démultiplication de marche arrière inversant le sens de rotation des roues.

Pour déterminer les rapports de démultiplication d'une boîte de vitesses il est nécessaire de prendre en considération plusieurs contraintes. Ces contraintes telles que par exemple la capacité du véhicule à démarrer en pente lorsqu'il est à sa masse maximale ou encore la vitesse du moteur à laquelle on souhaite obtenir la vitesse maximale du véhicule, déterminent le dimensionnement des rapports de démultiplication d'une boîte de vitesses.

La plupart des trajets en véhicule automobile étant effectués avec une masse du véhicule proche de sa masse à vide en ville et sur route plane, la contrainte de démarrage en pente engendre une conception d'un premier rapport de vitesse inutilement trop court dans la grande majorité des démarrages du véhicule engendrant notamment une surconsommation.

Afin de minimiser cet inconvénient, une augmentation du rapport de démultiplication de la première vitesse est réalisée afin d'obtenir un compromis entre un décollage du véhicule relativement aisé et une faible consommation du véhicule. Cependant, ce premier rapport « plus allongé » entraîne en cas de démarrage en forte pente certaines difficultés et notamment des difficultés de décollage du véhicule ainsi que des retards à l'accélération en cas de démarrage rapide.

On entend par le terme décollage l'action consistant à passer d'un état d'immobilité à un état de mouvement.

Dans ce contexte, la présente invention vise à fournir une boîte de vitesses comprenant une pluralité de rapports de démultiplication et favorisant à la fois le décollage du véhicule lors d'un démarrage en forte pente occasionnelle tout en permettant une faible consommation quotidienne du véhicule.

A cette fin, l'invention propose une boîte de vitesses de véhicule automobile **caractérisée en ce qu'**elle comporte :
- une pluralité de rapports de démultiplication incluant au moins deux rapports de décollage,
- un calculateur comportant des moyens pour sélectionner automatiquement un rapport de décollage parmi lesdits au moins deux rapports de décollage en fonction des conditions d'utilisation dudit véhicule automobile.

On entend par rapport de décollage un rapport apte à initialiser le mouvement du véhicule lorsque le véhicule est à l'arrêt.

On désigne par conditions d'utilisation par exemple les différentes situations et/ou les différentes routes que peut rencontrer un véhicule lors de son cycle de vie.

Outre les caractéristiques principales qui viennent d'être mentionnées dans le paragraphe précédent, la boîte de vitesses d'un véhicule automobile selon l'invention peut présenter une ou plusieurs caractéristiques supplémentaires ci-dessous, considérées individuellement ou selon toutes les combinaisons techniquement possibles :
- ladite boîte de vitesses est une boîte de vitesses automatique ou manuelle pilotée automatiquement ;
- ledit calculateur comporte au moins une entrée apte à recevoir une information numérique provenant d'un capteur pour la mise en oeuvre d'une stratégie de commande ;
- ladite boîte de vitesses comporte :
   - un premier rapport de démultiplication apte au décollage du véhicule en conditions de démarrage sévères ;
   - un deuxième rapport de démultiplication apte au décollage du véhicule en conditions de démarrage normales ;
ledit premier rapport de démultiplication étant défini afin de fournir, à régime moteur équivalent, une vitesse au véhicule plus faible que ledit deuxième rapport de démultiplication ; ledit rapport de décollage étant choisi entre au moins ces deux rapports de démultiplication ;

La présente invention a également pour objet un procédé de commande d'une boîte de vitesse selon l'invention caractérisé en ce que ledit calculateur reçoit une information numérique provenant d'au moins un des capteurs suivant :
- capteur de position de l'accélérateur,
- capteur de charge des suspensions,
- capteur de basculement en mode manuelle,
- capteur de basculement en mode spécifique ;

Selon une autre caractéristique, le procédé est tel que chaque information numérique fournie par l'un au moins desdits capteurs correspond à deux états possibles dudit capteur : un premier état dit état par défaut et un deuxième état dit état de basculement.

Selon une autre caractéristique, le procédé est tel que :
- ledit capteur de charge des suspensions bascule de son état par défaut à son état de basculement si la charge du véhicule dépasse un seuil donné,
- ledit capteur de position de l'accélérateur bascule de son état par défaut à son état de basculement si la pédale d'accélérateur est dans une position autre que sa position de repos,
- ledit capteur de basculement en mode manuelle bascule de son état par défaut à son état de basculement si la commande manuelle est enclenchée,
- ledit capteur de basculement en mode spécifique bascule de son état par défaut à son état de basculement si le mode spécifique est activé.

Selon une autre caractéristique, le procédé est tel que ledit calculateur sélectionne ledit premier rapport de démultiplication lorsque l'un au moins desdits capteurs est dans son état de basculement.

Selon une autre caractéristique, le procédé est tel que ledit calculateur sélectionne ledit second rapport de démultiplication lorsque l'ensemble desdits capteurs est dans un état par défaut.

Selon une autre caractéristique, le procédé est tel que ledit procédé dudit calculateur sélectionne un rapport de décollage lorsque le véhicule est à l'arrêt depuis au moins un temps donné.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une représentation schématique illustrant les différentes informations prises en compte par le moyen calculateur de la boîte de vitesses selon l'invention,
- la figure 2 illustre un mode de réalisation de la stratégie de commande de boîte de vitesses du moyen calculateur.

Dans toutes les figures, les éléments communs portent les mêmes numéros de référence sauf précision contraire. D'une façon générale, nous nommerons par « 1 », « 2 », « 3 », « 4 », « 5 », « 6 » les rapports de démultiplications d'une boîte de vitesses classique, c'est-à-dire une boîte de vitesses connue de l'art antérieur. Nous nommerons de la même façon par « C », « 1' », « 2' », « 3' », « 4' », « 5' » les rapports de démultiplication d'une boîte de vitesses selon l'invention.

La boîte de vitesses selon l'invention permet de dissocier les besoins de démarrages courants, c'est-à-dire notamment sur terrains plats, des besoins de démarrages sévères, tels que les démarrages en pentes ou les démarrages effectués lorsque le véhicule est chargé.

La boîte de vitesses selon l'invention est indifféremment une boîte de vitesses automatique ou une boîte de vitesses manuelle pilotée.

On désigne par boîte de vitesses automatique une boîte de vitesses capable de déterminer de façon autonome le meilleur rapport de démultiplication possible en fonction d'informations extérieures telles que le couple et le régime moteur, l'enfoncement de la pédale de l'accélérateur, la vitesse du véhicule, le couple résistant du véhicule et d'autres fonctions plus complexes.

A l'identique on désigne par boîte de vitesses manuelle pilotée une boîte de vitesses manuelle classique à laquelle on a greffé un système automatisé pilotant automatiquement le passage des rapports de démultiplication et l'embrayage de la boîte de vitesses.

Ainsi, la boîte de vitesses selon l'invention comporte parmi une pluralité de rapports de démultiplication, un premier rapport court C permettant de faciliter le décollage du véhicule en pente lorsque le véhicule est chargé à sa masse maximale, ou fournissant, en cas de besoins, une accélération maximale de décollage au véhicule.

Dans le but de comparer, d'adapter et de repartir correctement chaque rapport de démultiplication sur la plage d'utilisation du régime moteur, le rapport de démultiplication est défini par la vitesse de déplacement du véhicule qu'apporte l'utilisation du rapport de démultiplication à un régime moteur fixe.

Ainsi de façon courante, un rapport de démultiplication est défini par la vitesse de déplacement de véhicule en km/h qu'il fournit pour un régime moteur de 1000 tours/minute. De façon générale, on parlera d'allongement d'un rapport de démultiplication lorsque le rapport de démultiplication fournit une vitesse de déplacement du véhicule supérieure pour un même régime moteur. De la même façon, on parlera de raccourcissement d'un rapport de démultiplication lorsque le rapport de démultiplication fournit une vitesse de déplacement du véhicule inférieure pour un même régime moteur.

Le tableau 1 ci-dessous représentent un mode de réalisation avantageux d'une boîte de vitesses automatique ou manuelle pilotée selon l'invention et plus particulièrement une répartition avantageuse des rapports de démultiplication en comparaison avec les rapports de démultiplication d'une boîte de vitesses classique.

**Tableau 1**

| Boite de vitesse classique | | Boite de vitesse selon l'invention | |
|---|---|---|---|
| Rapport de demultiplication pour | Vitesse en km/h 1000 t/min | Rapport de demultiplication | Vitesse en km/h pour 1000 t/min |
| 1 | 8 | C | 5 |
| 2 | 16 | 1' | 10 |
| 3 | 25 | 2' | 19 |
| 4 | 36 | 3' | 31 |
| 5 | 47 | 4' | 42 |
| 6 | 54 | 5' | 54 |

Dans la boîte de vitesses selon l'invention, le premier rapport court C est optimisé afin de permettre le décollage sur une route en pente du véhicule à sa charge maximale.

Ainsi, le premier rapport de démultiplication C fournit une vitesse de déplacement à 1000 tours/min inférieure à celle du premier rapport de démultiplication 1 d'une boîte de vitesses classique. De façon générale, afin de garantir un bon décollage du véhicule quelle que soit la charge du véhicule et quel que soit le degré de la pente, le premier rapport de démultiplication C est inférieur ou égal au premier rapport de démultiplication 1 d'une boîte de vitesses classique.

Le premier rapport court C n'est toutefois pas utilisé dans les conditions dites « normales » de roulage ainsi que dans les cycles d'homologation du véhicule. On entend par « conditions normales » notamment les conditions de roulage lorsque le véhicule est proche de sa masse à vide et/ou lorsque le véhicule roule sur un terrain plat. A l'inverse, on entend par « conditions sévères » les conditions de roulage lorsque notamment le véhicule roule sur un terrain en pente et/ou avec une charge proche de sa charge maximale.

Le deuxième rapport de démultiplication 1' n'ayant plus besoin de répondre à la contrainte de décollage en pente à la masse maximale du véhicule, il peut être rallongé et optimisé afin d'assurer uniquement le décollage du véhicule avec une charge sensiblement proche de sa masse à vide sur terrain plat avec une faible consommation de carburant. Il est à noter que ce deuxième rapport de démultiplication 1' correspond sensiblement à un rapport intermédiaire entre le rapport 1 et le rapport 2 d'une boîte de vitesses connue.

D'une façon plus générale, la présence d'un rapport court C, destiné uniquement au décollage du véhicule en pente et sous forte charge, combiné à un deuxième rapport 1' plus long apte aux décollages sur terrains plats permet de mieux étager les autres rapports de la boîte de vitesses selon l'invention, et donc d'améliorer l'agrément de conduite tout en diminuant la consommation du véhicule.

Les rapports intermédiaires 2', 3', 4' sont ensuite répartis régulièrement entre le deuxième rapport de démultiplication 1' et le dernier rapport de démultiplication 5' de façon à optimiser la puissance et le couple du moteur.

Le dernier rapport de démultiplication 5' est optimisé afin d'obtenir une vitesse de déplacement du véhicule maximale sensiblement au régime de puissance maximale du moteur.

Le choix du rapport de décollage du véhicule se réalise automatiquement au moyen d'un calculateur déterminant une stratégie de commande de la boîte de vitesses.

Il est cependant possible à l'utilisateur de forcer le choix du rapport de décollage à enclencher par la sélection d'un mode de conduite spécifique de type « sport » engendrant l'enclenchement du premier rapport de démultiplication court C par basculement de la stratégie de commande.

Quelle que soit la boîte de vitesses, automatique ou manuelle pilotée, l'engagement des rapports et le pilotage de l'embrayage sont réalisés au moyen d'actionneurs dédiés, par exemple de type électrique, hydraulique ou pneumatique.

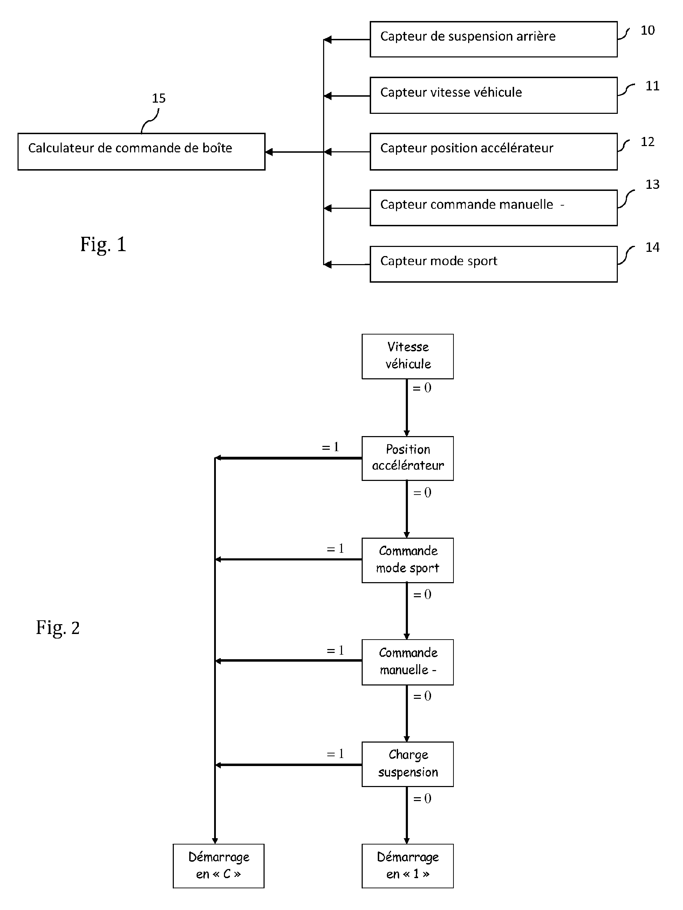

La figure 1 est une représentation schématique illustrant différentes sources d'informations utiles à l'élaboration de la stratégie de commande du calculateur de la boîte de vitesses selon l'invention.

Afin de sélectionner et d'enclencher automatiquement le premier rapport court C ou le deuxième rapport 1', le calculateur 15 de la boîte de vitesses prend en considération différentes informations provenant de capteurs tels que des capteurs de charge de suspensions, notamment des suspensions arrières. Les capteurs de charge de suspensions sont généralement présents sur de nombreux véhicules notamment pour la gestion des suspensions et de la répartition de freinage.

La stratégie de commande du calculateur 15 de la boîte de vitesses selon l'invention prend en considération les informations provenant d'au moins :
- un capteur 10 de charges de suspension arrière,
- un capteur 11 de vitesse du véhicule,
- un capteur 12 de position de la pédale d'accélérateur,
- un capteur 13 de sélection de la commande boîte de vitesses manuelle,
- un capteur 14 de sélection d'un mode de conduite « sport ».

A partir d'au moins une des informations transmises au calculateur 15 issues de ces différents capteurs 10, 11, 12, 13, 14, le calculateur 15 de la boîte de vitesses détermine, par des moyens logiciels de sélection, si le démarrage du véhicule doit s'effectuer avec le deuxième rapport de démultiplication 1' ou avec le premier rapport de démultiplication court C.

Lorsque le rapport de décollage à enclencher est déterminé par le calculateur 15, la boîte de vitesses comportant, de façon connue, des moyens d'engagement de rapports de démultiplication engage automatiquement le rapport de décollage.

La figure 2 illustre un mode de réalisation de la stratégie de commande du calculateur 15 de la boîte de vitesses selon l'invention.

Les différentes informations provenant des capteurs illustrés en référence à la figure 1 permettent de déterminer le rapport de démultiplication à enclencher quelles que soient les conditions d'utilisation du véhicule.

Dans une représentation avantageuse de l'invention, la sélection du rapport par le calculateur s'effectue au moyen d'une combinaison logique. Ainsi chaque donnée d'entrée est suffisante à elle seule pour basculer d'un mode dit « normal » avec l'enclenchement du deuxième rapport 1', à un mode spécifique dit « sport » avec l'enclenchement du premier rapport court C.

Les différents capteurs fournissent en entrée du calculateur une information numérique suivant deux états du capteur, un premier état dit « état par défaut » et un deuxième état dit « état de basculement ».

Dans ce mode de réalisation avantageux, les capteurs fournissent une information binaire correspondant à l'état de chaque capteur, « 0 » étant l'état par défaut et « 1 » étant l'état de basculement, de sorte que :
- l'état du capteur 10 de suspension arrière :
   - est égal à 0 si la charge est inférieure à un seuil donné ;
   - est égal à 1 dans le cas contraire ;
- l'état du capteur 11 de la vitesse du véhicule :
   - est égal à 0 si le véhicule est à l'arrêt depuis au moins un temps T, typiquement T = 2 secondes ;
   - est égal à 1 dans le cas contraire ;
- l'état du capteur 12 de position de la pédale d'accélérateur :
   - est égal à 0 si la pédale d'accélération est au repos ;
   - est égal à 1 dans le cas contraire ;
- l'état du capteur 13 de commande de boîte manuelle :
   - est égal à 0 si la palette ou le levier de vitesse n'a pas été enclenché depuis que la vitesse du véhicule est inférieure à un seuil V, typiquement V = 2 km/h ;
   - est égal à 1 dans le cas contraire ;
- l'état du capteur 14 de sélection du mode « sport » :
   - est égal à 0 si le mode sport n'est pas activé,
   - est égal à 1 dans le cas contraire.

Il est à noter toutefois que l'information du capteur 11 de vitesse de véhicule est prise en compte avant le déroulement de la stratégie de commande. En effet, si le capteur 11 fournit une information correspondant à l'état par défaut, c'est-à-dire « 0 », alors la stratégie de commande est autorisée. En revanche, si le capteur 11 fournit une information correspondant à l'état de basculement, la stratégie de commande n'est pas autorisée et aucun rapport de décollage n'est sélectionné.

Ainsi, l'invention propose une boîte de vitesses manuelle pilotée ou automatique comprenant un calculateur capable de sélectionner au moyen d'une stratégie de commande un rapport de démultiplication permettant un décollage quelles que soient les conditions d'utilisation du véhicule automobile tout en préservant un agrément de conduite et en optimisant la consommation de carburant.

Il a été essentiellement décrit une boîte de vitesses manuelle pilotée ou une boîte de vitesses automatique comportant un calculateur capable de sélectionner un rapport de décollage parmi une pluralité de rapport de démultiplication. Il est également possible d'appliquer l'invention à une boîte de vitesses manuelle.

Dans le cas d'une boîte de vitesses manuelle, le calculateur comporte en outre des moyens d'affichage permettant d'indiquer à l'utilisateur le rapport de décollage à enclencher manuellement, ledit rapport de décollage étant sélectionné par le calculateur de façon identique à la sélection du rapport de décollage dans le cas d'une boîte de vitesse automatique ou manuelle pilotée.

Les autres avantages de l'invention sont notamment les suivants :
- gains de consommation de carburant l'ordre d'une valeur sensiblement voisine de 6%,
- amélioration de l'agrément de conduite,
- pas d'augmentation du prix de revient économique.

## Revendications

1. Boîte de vitesses de véhicule automobile **caractérisée en ce qu'**elle comporte :
- une pluralité de rapports de démultiplication incluant au moins deux rapports de décollage,
- un calculateur (15) comportant des moyens pour sélectionner automatiquement un rapport de décollage parmi lesdits au moins deux rapports de décollage en fonction des conditions d'utilisation dudit véhicule automobile.

2. Boîte de vitesses de véhicule automobile selon la revendication 1 **caractérisée en ce que** ladite boîte de vitesses est une boîte de vitesses automatique ou manuelle pilotée automatiquement.

3. Boîte de vitesses de véhicule automobile selon la revendication 2 **caractérisée en ce que** ledit calculateur (15) comporte au moins une entrée apte à recevoir une information numérique provenant d'un capteur (10, 12, 13, 14) pour la mise en oeuvre d'une stratégie de commande.

4. Boîte de vitesses de véhicule automobile selon l'une des revendications 1 à 3 **caractérisée en ce que** ladite boîte de vitesses comporte :
• un premier rapport de démultiplication (C) apte au décollage du véhicule en conditions de démarrage sévères ;
• un deuxième rapport de démultiplication (1') apte au décollage du véhicule en conditions de démarrage normales ;
ledit premier rapport de démultiplication (C) étant défini afin de fournir, à régime moteur équivalent, une vitesse au véhicule plus faible que ledit deuxième rapport de démultiplication (1') ; ledit rapport de décollage étant choisi entre au moins ces deux rapports de démultiplication.

5. Procédé de commande d'une boîte de vitesses selon l'une des revendications 3 à 4 **caractérisé en ce que** ledit calculateur (15) reçoit une information numérique provenant d'au moins un des capteurs suivant :
• capteur (12) de position de l'accélérateur,
• capteur (10) de charge des suspensions,
• capteur (13) de basculement en mode manuelle,
• capteur (14) de basculement en mode spécifique.

6. Procédé de commande d'une boîte de vitesses selon la revendication 5 **caractérisé en ce que** chaque information numérique fournie par l'un au moins desdits capteurs (10, 12, 13, 14) correspond à deux états possibles dudit capteur : un premier état dit état par défaut et un deuxième état dit état de basculement.

7. Procédé de commande d'une boîte de vitesses selon la revendication 6 **caractérisé en ce que** :
• ledit capteur (10) de charge des suspensions bascule de son état par défaut à son état de basculement si la charge du véhicule dépasse un seuil donné,
• ledit capteur (12) de position de l'accélérateur bascule de son état par défaut à son état de basculement si la pédale d'accélérateur est dans une position autre que sa position de repos,
• ledit capteur (13) de basculement en mode manuelle bascule de son état par défaut à son état de basculement si la commande manuelle est enclenchée,
• ledit capteur (14) de basculement en mode spécifique bascule de son état par défaut à son état de basculement si le mode spécifique est activé.

8. Procédé de commande d'une boîte de vitesses selon la revendication 7 pour la commande d'une boîte de vitesses selon la revendication 4 **caractérisé en ce que** ledit calculateur (15) sélectionne ledit premier rapport de démultiplication (C) lorsque l'un au moins desdits capteurs est dans son état de basculement.

9. Procédé de commande d'une boîte de vitesses selon la revendication 8 **caractérisé en ce que** ledit calculateur (15) sélectionne ledit second rapport de démultiplication (1') lorsque l'ensemble desdits capteurs est dans son état par défaut.

10. Procédé de commande d'une boîte de vitesses selon la revendication 9 **caractérisé en ce que** ledit procédé dudit calculateur (15) sélectionne un rapport de décollage lorsque le véhicule est à l'arrêt depuis au moins un temps donné.
